# EUROPÄISCHE PATENTSCHRIFT

(11) **EP 3 343 030 B1**
(45) Veröffentlichungstag und Bekanntmachung des Hinweises auf die Patenterteilung: **04.11.2020**
(21) Anmeldenummer: 17209867.5
(22) Anmeldetag: 21.12.2017
(51) Int. Cl.: F03D 80/70, F03D 17/00, F16C 41/00

(54) **VORRICHTUNG UND VERFAHREN ZUR ÜBERWACHUNG EINES BLATTLAGERS EINER WINDKRAFTANLAGE**
DEVICE AND METHOD FOR MONITORING A BLADE BEARING OF A WIND TURBINE
DISPOSITIF ET PROCÉDÉ DE SURVEILLANCE D'UN PALIER DE PALE D'UNE ÉOLIENNE

(30) Priorität: 22.12.2016 DE 102016226114
(43) Veröffentlichungstag der Anmeldung: 04.07.2018
(73) Patentinhaber: Eolotec GmbH, 90429 Nürnberg (DE)
(72) Erfinder: Reichhart, Marc, 90763 Fürth (DE)
(74) Vertreter: FDST Patentanwälte

(56) Entgegenhaltungen:
- EP-A1- 2 999 894
- EP-A2- 2 290 235
- EP-A2- 2 801 729
- US-A1- 2015 168 257

## Beschreibung

Die Erfindung betrifft eine Vorrichtung sowie ein Verfahren zur Überwachung eines Blattlagers einer Windkraftanlage.

In Windkraftanlagen werden Kugel- oder Rollendrehverbindungen für die Lagerung der Rotorblätter eingesetzt. Die Rotorblätter sind dabei allgemein an einer Nabe der Windkraftanlage gelagert. Sie treiben einen Rotor der Windkraftanlage an, welcher an einem Stator über ein Hauptlager der Windkraftanlage gelagert ist. Rotor und Stator sind typischerweise in einer sogenannten Gondel angeordnet, die auf einem Turm angebracht ist.

Diese sogenannten Blattlager oder auch Pitchlager müssen die Kippmomente der Blätter aufnehmen, die aus Gewichts- und Windlasten resultieren. Die Blattlager weisen typischerweise Durchmesser von größer 1 m auf. Die Blattlager ermöglichen eine Drehung des Blattes um eine Drehachse, auch als Pitchen bezeichnet, wodurch die Leistungsaufnahme der Anlage geregelt wird. Die Funktion dieser Blattlager ist damit sicherheitsrelevant. Kommt es zum Blockieren der Blattlager, kann die Leistungsaufnahme der Anlage nicht mehr begrenzt werden, sodass es im Worst Case zur Zerstörung der Windkraftanlage kommt. Im Falle eines Bruchs des Blattlagers wird das Blatt abgeworfen, was ebenfalls die Windkraftanlage zerstören kann.

Aus diesem Grund ist eine Überwachung der Blattlager äußerst sinnvoll, um sicherheitsrelevante Schäden an den Blattlagern frühzeitig zu erkennen. Andererseits ist es aber auch aus wirtschaftlichen Gründen sinnvoll, Blattlager zu überwachen, die bereits eine Vorschädigung aufweisen. Da Blattlager im Grunde sehr robuste Lager sind, ist auch bei einer bereits bestehenden Schädigung der Lager noch ein sicherer Weiterbetrieb der Anlage möglich, wenn der Schadensfortschritt mittels eines Condition Monitoring Systems überwacht wird. Dadurch werden weiterführende wirtschaftliche Schäden z.B. durch Betriebsausfall der Anlage vermieden.

Bei Blattlagern ist jedoch eine konventionelle Überwachung mittels Schwingungsfrequenzüberwachung nicht möglich, da die Lager nur Schwenkbewegungen um die Drehachse bis maximal ca. 110° ausführen und nicht rotieren. Außerdem ist die Drehzahl im Vergleich zu rotativen Lagern sehr gering, was eine gezielte Schwingungsüberwachung durch Beschleunigungssensoren zusätzlich erschwert.

Für ein rotatives Lager, wie dem Hauptlager einer Windkraftanlage, welches um eine Rotationsachse rotiert, ist beispielsweise aus der WO 2017/154257 eine Schwingungsüberwachung zu entnehmen. Hierbei wird ein Sensor in einen Spannring integriert, der zur Aufbringung einer Vorspannkraft für das Hauptlager vorgesehen ist.

Aus der EP 2 801 729 A2 ist ebenfalls ein rotatives Hauptlager einer Windkraftanlage zu entnehmen, bei dem ein Lagerspiel des Hauptlagers gemessen und daraus die Lagervorspannung bestimmt wird.

Aus der EP 2 290 235 A1 ist ein Verfahren zur Ermittlung einer aktuellen Belastung von Rotorblättern einer Windkraftanlage zu entnehmen. Hierzu wird eine Verformung eines Lagerrings eines Blattlagers des Rotorblatts ausgemessen.

In der jüngeren Vergangenheit treten vermehrt Schäden an Blattlagern von Windkraftanlagen auf. Dabei handelt es sich z.B. um sog. False Brinelling, allgemeinen starken Verschleiß des Laufbahnsystems, Kanten- und Laufbahnausbrüche, Korrosion des Laufbahnsystems durch Undichtigkeiten, Risse in den Lagerringen sowie Wälzkörperschäden. Diese Schäden führen direkt oder indirekt im Laufe der Zeit zu einem erhöhten relativen Verformen bzw. Verkippen des Lageraußenrings zum Innenring. Dies liegt daran, dass durch die Schädigungen im ehemals vorgespannten Laufbahnsystem zunehmendes Lagerspiel entsteht und sich die Kontaktverhältnisse ändern oder im Fall von Rissen die Steifigkeit der Lagerringe sinkt.

Diese Verformung kann z.B. durch eine Messuhr erfasst werden, indem der Fuß der Messuhr an einem Ring des Blattlagers befestigt wird und der Messfühler auf den anderen Ring entweder in axialer oder in radialer Richtung misst. Um allerdings überhaupt etwas messen zu können, muss ein definierter Lastwechsel auf die Lagerung aufgebracht werden. Dabei kann es sich beispielsweise um ein Wechselmoment (Kippspiel) oder um einen Wechsel von axialer Druck-Zug Belastung handeln. Auf einer Windkraftanlage kann dies realisiert werden, indem die Messabstandsdifferenz während eines Blattstellungswechsels von horizontal links nach horizontal rechts (Wechselmoment) oder von oben nach Unten (Druck-Zug) gemessen wird. Die Belastung ist damit durch das Blattgewicht und den Schwerpunkt des Blattes definiert. Somit kann auf ein Lagerspiel bzw. auf eine Schädigung des Lagers geschlossen werden.

In der Praxis gestaltet sich die Umsetzung einer solchen Messung allerdings als äußerst schwierig und aufwendig. Zunächst kann eine solche Messung nur bei sehr eingeschränkten Windgeschwindigkeiten erfolgen. Dies liegt daran, dass das Servicepersonal die Anlage bei stärkerem Wind nicht betreten kann und außerdem die Windlasten das Messergebnis signifikant verändern würden. Ein Vergleich mehrerer Messungen und die Überwachung einer Veränderung ist damit kaum möglich. Außerdem ist bei fortgeschrittener Schädigung ein progressiver Schadensfortschritt zu erwarten. Die Inspektionsintervalle müssen dadurch immer kürzer werden. Dies führt zu erheblichen Kosten.

Ausgehend hiervon liegt der Erfindung die Aufgabe zu Grunde, eine Überwachung eines Blattlagers mit Hilfe eines Messsystems zu ermöglichen, um Schädigungen der Blattlager zu erkennen und insbesondere den Schadensfortschritt zu überwachen.

Die Aufgabe wird gemäß der Erfindung gelöst durch eine Vorrichtung mit den Merkmalen des Anspruchs 1 sowie durch ein Verfahren mit den Merkmalen des Anspruchs 15. Die im Hinblick auf die Vorrichtung angeführten Merkmale sind sinngemäß auch auf das Verfahren zu übertragen.

Die Vorrichtung und das Verfahren sind dabei derart gestaltet, dass die Messüberwachung im laufenden Betrieb der Anlage, also während einer windbedingten Rotation der Nabe um die Rotationsachse kontinuierlich oder in regelmäßigen Abständen automatisch erfolgt. Es sind keine speziellen manuellen Maßnahmen zur Messung erforderlich. Vorzugsweise ist das Messsystem derart ausgebildet, dass es auch auf bestehenden älteren Windkraftanlagen einfach installiert werden kann. Hierzu ist es vorzugsweise völlig autark von der Anlagensteuerung ausgebildet.

Erfindungsgemäß ist ein Messsystem vorgesehen, das kontinuierlich, mindestens jedoch regelmäßig wiederholend Abstandsmessungen im laufenden Betrieb der Windkraftanlage vornimmt und aus dieser Messung auf eine Schädigung des Lagers schließt. Über den Abstand wird implizit auch eine Verkippung erfasst. Für die Messung wird mindestens ein berührungsloser (Abstands-) Sensor am Blattlager oder in der direkten Umgebung angebracht. Gemäß einer ersten, bevorzugten Ausgestaltung erfolgt die Messung relativ vom drehenden zum stehenden System (oder umgekehrt) in radialer und/oder axialer Richtung. Der Sensor einerseits und die Messfläche andererseits sind bei dieser Variante daher an unterschiedlichen Bauteilen des rotierenden Systems angeordnet. Der Sensor misst dabei berührungslos auf eine Messfläche. Die Berührungslose Messung ist im Betrieb notwendig, da der/die Sensor/en relativ zur Messfläche rotieren. Eine geeignete Messfläche kann durch einen Klotz, eine Scheibe oder ein Blech erzeugt werden, die entweder am Blattlager oder in der direkten Umgebung angebracht wird (z.B. Kleben oder Schrauben). Bei den Sensoren kann es sich beispielsweise um kapazitive Sensoren, induktive Sensoren, Magnetsensoren oder optische Sensoren handeln. Im Fall von Magnetsensoren ist unter Messfläche ein Magnet zu verstehen.

Gemäß einer alternativen Ausgestaltung sind der Sensor sowie die Messfläche gemeinsam an einem Bauteil, insbesondere an einem Lagerring (Außenring oder Innenring) angeordnet. Sensor und Messfläche sind dabei insbesondere derart angeordnet, dass eine Messung in Umfangsrichtung erfolgt. Über diese Maßnahme lassen sich Abstandsveränderungen in Umfangsrichtung eines Lagerrrings erfassen. Hierdurch wird das Lager z.B. auf die Entstehung und insbesondere auf die Ausbreitung von Rissen im Lagerring überwacht, speziell um rechtzeitig im Sinne eines Condition Monitoring erkennen zu können, ob bzw. wann das schadhafte Bauteil ausgetauscht werden muss. Speziell wird die Messvorrichtung bestehend aus Sensor und Messfläche beidseitig eines erkannten Risses angebracht, um dessen Ausbreitung im weiteren Betrieb zu überwachen.

Die zuvor und im Folgenden angeführten speziellen Aus- und Weiterbildungen des Messsystems, bei dem auf die Ausführungsvariante Bezug genommen wird, bei der Sensor und Messfläche an relativ zueinander rotierenden Bauteilen angeordnet sind gelten - sofern technisch machbar - gleichermaßen auch für die zuvor beschriebene Anordnung, bei der Sensor und Messfläche an einem Bauteil angeordnet sind.

Die Abstandsmessung erfolgt automatisiert, d.h. ein manuelles Messen mit Bedienpersonal vor Ort im Bereich des Blattlagers ist nicht erforderlich und erfolgt nicht. Zur Steuerung und Veranlassung der Messung ist eine Steuereinheit vorgesehen. Weiterhin umfasst das Messsystem eine Auswerteeinheit, die zur Auswertung der über den Sensor gemessenen Messdaten ausgebildet ist, um anhand der Messdaten zu prüfen, ob das Blattlager eine Schädigung aufweist. Hierzu ist insbesondere ein Vergleich der aktuellen Messung mit einer früheren Messung oder einer Referenzmessung vorgesehen. Aus den Änderungen wird zurückgeschlossen, ob das Blattlager eine Schädigung aufweist und ob und inwieweit ein festgestellter Schaden noch tolerierbar ist. Ein veränderter Abstandswert lässt auf eine veränderte Verformung oder Verkippung schließen.

Es ist in einer Variante vorgesehen, direkt auf einen Lagerring oder ein Umbauteil zu messen, sodass die Bauteiloberfläche als Messfläche dient.

Im Betrieb der Windkraftanlage treten am Blattlager stark wechselnde Lasten auf. Außerdem rotieren Sensor und Messfläche im Betrieb zeitweise relativ zueinander, insbesondere bei einer Verdrehung des Rotorblattes um die Drehachse. Dadurch gehen in die Messung auch Fertigungsabweichungen (Plan- und/oder Rundlauffehler) der Messfläche ein, was zu einem Messfehler führt. Zusätzlich ist die Relativverformung der Ringe zueinander auch von deren Winkelposition abhängig. Sind also die äußeren Lasten und die Fertigungsabweichungen (bzw. die Winkelposition von Sensor und Messfläche zueinander) während der Messung nicht bekannt, kann aus einer einzelnen Messung der Ringverformung nicht sinnvoll auf eine Schädigung geschlossen werden. Auch eine Mittelwertsbildung über viele Messungen und einen längeren Zeitraum ist schwierig, da z.B. saisonale Unterschiede der Windgeschwindigkeiten oder Temperaturen zu unterschiedlichen Lasten führen. Die Messung würde dann einen Trend ergeben, sodass fälschlicherweise auf eine fortschreitende Schädigung geschlossen werden könnte.

Für aussagekräftige Messungen ist also vorzugsweise eine Berücksichtigung der aktuellen Lastsituation vorgesehen. Auf dem Markt gibt es Kraftmesssystem die speziell zur Messung der Kräfte an Blattwurzeln entwickelt wurden. Wird ein derartiges Kraftmesssystem eingebunden, kann die gemessene Verformung in Relation zur Kraft gesetzt werden und damit auf eine Schädigung des Lagers geschlossen werden. Gemäß einer ersten Variante werden daher derartige Kraftmesssysteme verwendet.

Allerdings sind derartige Kraftmesssysteme sehr teuer und wenig robust. In einer vorteilhaften Weiterbildung der Erfindung, wird daher eine Kraftmessung vermieden, indem das spezifische Last- und Betriebsverhalten der Blattlager von Windkraftanlagen in der Auswertung der Abstands - oder Verformungsmessung berücksichtigt wird.

Die Verformungen (Abstandsveränderungen) werden hauptsächlich durch das hohe Biegemoment an der Blattwurzel verursacht. Dieses Moment setzt sich aus einem ersten Biegemoment My hervorgerufen durch das Gewicht des Blattes und einem zweiten Biegemoment Mx zusammen, das durch die Windlasten hervorgerufen ist. Das Gewicht- abhängige Moment My ist abhängig von der Blattstellung und weist über eine Rotorumdrehung, d.h. eine Drehung der Nabe um 360° um die Rotationsachse, einen sinusförmigen Verlauf auf, dessen Amplitude weitestgehend unabhängig vom Betriebszustand (z.B. Leistung, Windlast) der Windkraftanlage ist. Das windlastabhängige Drehmoment Mx dagegen hängt sehr stark von der Windgeschwindigkeit bzw. vom Drehwinkel ab und ist damit der entscheidende Faktor für die Bewertung des Abstandsmessergebnisses, welches die Verformung wiedergibt.

Allgemein ist das Rotorblatt aus einer Normalstellung, in der es für eine maximale Kraftübertragung zum Wind optimal ausgerichtet ist, in eine Ruhestellung um die Drehachse um einen Drehwinkel verdrehbar. In der Ruhestellung ist das Rotorblatt quasi aus dem Wind genommen. Diese Ruhestellung wird auch als Fahnenstellung bezeichnet. Der maximale Drehwinkel bis zum Erreichen der Ruhestellung wird nachfolgend auch als Ruhewinkel bezeichnet und liegt beispielsweise bei bis zu 90°oder bei bis zu 110°. Dieser Ruhewinkel ist anlagenspezifisch vorgegeben. Im Betrieb werden die Rotorblätter bei höheren Windgeschwindigkeiten oberhalb von sogenannten Nenngeschwindigkeiten, für die die Anlage optimiert ist, teilweise aus dem Wind genommen, um die Leistungsaufnahme und Belastung zu begrenzen. Dieses Drehen zur Begrenzung der Leistungsaufnahme wird insbesondere als das eigentliche Pitchen bezeichnet. Hierbei erfolgt - bei entsprechenden variierenden Windstärken - fortlaufend ein Verdrehen (Pitchen) über einen wiederum typischerweise anlagenspezifischen Drehwinkel-Bereich (aus der Normalstellung bei typischerweise etwa 0°) von beispielsweise 30° oder bis 45°. Eine Position innerhalb dieses Winkelbereichs des Pitchens wird nachfolgend als Pitchstellung bezeichnet. Es lassen sich daher drei Stellungen oder Bereiche Identifizieren, nämlich die Normalstellung (bei typischerweise 0°), der Pitchbereich (bis ca. 30°- 45°) sowie die Ruhe- oder Fahnenstellung (bei z.B. 90°oder 110°).

Die Erfindung macht sich zunutze, dass der Dreh- oder Pitchwinkel bis zum Erreichen der Nennleistung der Windkraftanlage konstant ist und bei etwa 0° liegt oder nur um wenige Grad variiert (insbesondere wesentlich kleiner 5°). Bevorzugt wird also während diesem Betriebszustand gemessen, wenn sich also das Rotorblatt in der Normalstellung befindet. Hierdurch scheidet der Pitchwinkel als Störgröße aus, so dass dieser Betriebszustand für die Messungen der durch Schädigung hervorgerufenen Spielerhöhung herangezogen wird.

Zur Bestimmung, ob sich die Anlage während der Messung in diesem Betriebszustand befindet, berücksichtigt das Messsystem und damit die Auswerteeinheit in einer Ausführungsvariante Signale der Anlagensteuerung (z.B. die aktuelle Anlagenleistung oder die Rotordrehzahl). In diesem Fall ist daher das Messsystem und die Auswerteeinheit datentechnisch mit der Anlagensteuerung verbunden. Unter Anlagensteuerung wird die Steuerung verstanden, mit der der normale Betrieb der Windkraftanlage inklusive der Verstellung der Rotorblätter bei zu hohen Windlasten gesteuert wird.

Vorzugsweise ist das Messsystem jedoch für einen von der Anlagensteuerung unabhängigen Betrieb ausgebildet.

Insbesondere für einen solchen autarken, von der Anlagensteuerung unabhängigen Betreib erfolgt in einer vorteilhaften Weiterentwicklung die Messung auf eine in Umfangsrichtung um die Drehachse begrenzte Messfläche, die so positioniert ist, dass Sensor und Messfläche nur über einen geringen Winkelbereich von maximal wenigen Grad, beispielsweise von maximal 5° gegenüberstehen. Solange also die Anlage unterhalb der Nennleistung betrieben wird und das Rotorblatt sich in der Normalstellung befindet, ist hierdurch gewährleistet, dass der Sensor und die Messfläche einander gegenüberliegen und eine Messung erfolgen kann. Wird jedoch das Rotorblatt aus dem Wind gedreht (z.B. wenn die Nennlast überschritten ist), dann wird die Zuordnung zwischen Messfläche und Sensor automatisch aufgehoben, d.h. die Messfläche und der Sensor liegen dann nicht mehr gegenüber. Dadurch erkennt das Messsystem automatisch, wenn gepitcht wird, weil der Messwert dann außerhalb des zu erwartenden Messbereichs liegt. Solche Messungen werden beispielsweise verworfen. Dadurch muss das erfindungsgemäße Messsystem nicht auf Werte der Anlagensteuerung zugreifen, was insbesondere im Falle einer Nachrüstung des Systems ein ganz erheblicher Vorteil ist.

Allerdings variiert das vom Wind hervorgerufene Moment Mx unterhalb der Nennleistung stark. Zum einen unterliegt die Windlast einer stochastischen Variation. Die dadurch verursachte Messwertvariation wird vorzugsweise durch Mittelung mehrerer Messungen zumindest reduziert.

Wichtiger ist aber das Betriebszustandsabhängige mittlere Niveau der Windgeschwindigkeit. Hier macht sich die Erfindung zu Nutze, dass unterhalb der Nennleistung eine gute Korrelation der Windgeschwindigkeit zum windlastabhängigen Biegemoment Mx vorliegt. Da weiterhin die Drehzahl des Rotors ebenfalls mit der Windgeschwindigkeit korreliert, wird in bevorzugter Ausgestaltung über die Drehzahl des Rotors auf das Niveau des windlastabhängigen Biegemoments Mx geschlossen.

In einer vorteilhaften Weiterentwicklung berücksichtigt das Messsystem also die Rotordrehzahl in der Auswertung und schließt von der Rotordrehzahl auf das windlastabhängige Biegemoment Mx. Der Zusammenhang wird insbesondere z.B. durch eine Simulation des Zusammenhangs zwischen Rotordrehzahl (Windgeschwindigkeit) und Biegemoment Mx bestimmt.

Für ein Condition Monitoring ist es aber auch ausreichend und vorzugsweise vorgesehen, die Ergebnisse nach der Rotordrehzahl zu klassieren und nur Messwerte bei gleicher Drehzahl zu vergleichen. Allgemein werden für die Auswertung und Prüfung, ob evtl. eine Schädigung eingetreten ist daher nur Abstandsmesswerte miteinander verglichen, die bei gleichen Rotordrehzahlen und damit bei gleichen Windlasten erfasst wurden. Die Rotordrehzahl wird gemäß einer Variante wiederum als Signal aus der Anlagensteuerung entnommen.

Vorzugsweise wird die Rotordrehzahl jedoch unabhängig von der Anlagensteuerung ermittelt.

Insbesondere hierzu ist das Messsystem derart ausgelegt, die Information der Rotordrehzahl unabhängig von der Anlagensteuerung zu ermitteln, sodass das Messsystem wiederum problemlos in bestehende Anlagen integriert werden kann.

Dazu ist gemäß einer ersten Variante z.B. ein zusätzlicher Sensor vorgesehen, der die Rotordrehzahl autark von der Anlagensteuerung erfasst. Bei diesem zusätzlichen Sensor handelt es sich insbesondere um einen Schwerkraftsensor, der die relative Richtung der Schwerkraft und damit die Position des Rotorblatts erfasst. Insbesondere handelt es sich um einen Kippschalter. Ein derartiger Sensor ist beispielsweise an der Rotornabe angeordnet. Aus der (Schalt-) Frequenz des Sensors / Kippschalters wird die Rotordrehzahl bestimmt.

Gemäß einer weiteren Variante wird die Rotordrehzahl durch eine entsprechende Auswertung der Abstandsmessung (Verformungsmessung) über mindestens eine Rotorumdrehung erhalten. Hier macht sich die Erfindung den Sinusförmigen Verlauf des Biege- oder Kippmoments My zu Nutze. Da ein sinusförmiger Verlauf der Belastung auch zu einem sinusförmigen Verlauf des Abstands als Maß für die Verformung führt, kann aus der Verformungsmessung, also aus einer Abfolge von mehreren Abstandsmessungen während zumindest einer Rotation um 360° um die Rotationsachse die Rotordrehzahl ermittelt werden. Voraussetzung ist, dass die Messung mindestens über eine komplette Rotorumdrehung erfolgt, besser jedoch über mehrere, beispielsweise mindestens drei. Aus der Periode dieser Verlaufsmessung (sinusförmiger Verlauf) wird auf die Rotordrehzahl zurückgeschlossen. Es wird insbesondere ein Zeitabstand T zwischen den Maxima und/oder Minima ausgewertet. Dies ist die Zeit für eine Rotorumdrehung, wodurch die Rotordrehzahl bekannt ist. Bevorzugt wird alternativ hierzu die Rotordrehzahl mittels einer FFT -Analyse der Messwerte ermittelt.

Um Fehlinterpretationen zu vermeiden, werden Messungen, deren Zeit T nicht im Erwartungsbereich liegen, vorzugsweise nicht berücksichtigt.

Da dem sinusförmigen gewichtsabhängigen Biegemoment My aber ein eher stochastisch wechselndes windlastabhängiges Biegemoment Mx (sinusförmige Ausprägung aufgrund des Höhengradienten des Windes und im Normalbetrieb stets positiv) ist es von Vorteil, bei der Ermittlung der Drehzahl die Sensorposition zu beachten:
Der zumindest eine Sensor ist allgemein unter einem Richtungswinkel α bezüglich der Drehachse des Blattlagers, also an einer Position um den Umfang des Blattlagers angeordnet. Durch die Rotorblätter wird allgemein eine Rotorebene aufgespannt, die typischerweise senkrecht zur Rotationsachse der Nabe orientiert ist. Unter einem Richtungswinkel α von 0° wird eine Position verstanden, die - in Blickrichtung der Rotationsachse auf die Nabe - vorne, dem Wind zugewandt liegt. +90°oder -90°sind Positionen um +90 °bzw. -90° aus der 0° Position verdreht. Und die Position +/- 180° liegt der 0° Position auf der windabgewandten Seite gegenüber.

Ist der Sensor bei einem Richtungswinkel α nahe 90° oder -90° angeordnet und damit in der Rotorebene, dominiert der Einfluss des gewichtsabhängigen Biegemoments My auf die Verformung. Die Drehzahlermittlung auf Basis der Verlaufsmessung (sinusförmiger Verlauf des Biegemoments My) ist in diesem Fall kein Problem. Vorzugsweise ist der Sensor daher bei einem derartigen Richtungswinkel zumindest nahe oder exakt bei 90° oder -90° angeordnet. Wird der Sensor unter einem Richtungswinkel von 0⁰ oder 180° angebracht, dominiert der Einfluss des windlastabhängigen Biegemoments Mx, was eine Drehzahlauswertung wie oben beschrieben deutlich erschwert. In diesem Fall kann z.B. die Auswertung eines zweiten Abstandssensors der in Richtung der Rotorebene (also in der durch die Rotorblätter aufgespannten Ebene insbesondere senkrecht zur Rotorachse) positioniert ist für die Drehzahlermittlung herangezogen werden.

In bevorzugter Ausgestaltung ist der Sensor oder sind mehrere Sensoren jedoch in Bereichen zwischen 0°, 90°, 180° sowie 270°angebracht und insbesondere bei +/- 45 ° bzw. bei +/- 135° angebracht. Der Sensor ist dabei vorzugsweise exakt an diesen Positionen angebracht oder mit einer Abweichung von +/- 10° oder von +/-5°. Der Vorteil dieser Ausgestaltung ist darin zu sehen, dass sich die Effekte des windlastabhängigen Biegemoments Mx und die des gewichtsabhängigen Biegemoments My überlagern. Durch eine Auswertung der Sensordaten, beispielweise durch einen geeigneten mathematischen Algorithmus, lässt sich dann aus den Sensordaten bereits eines einzigen Sensors sowohl die Drehzahl ermitteln als auch die Belastungen ableiten.

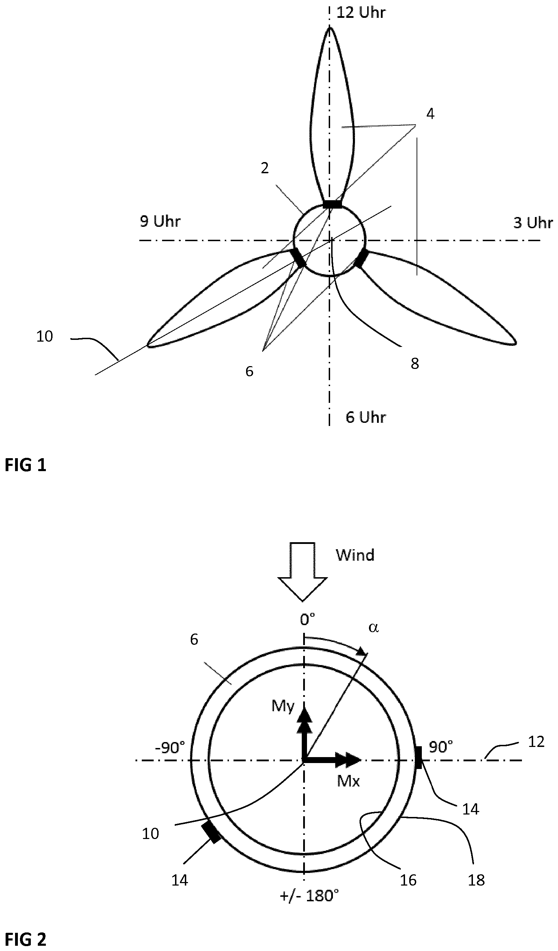

Da das windlastbedingte Drehmoment Mx im normalen Betrieb der Anlage stets positiv ist (bei einer Draufsicht mit Blickrichtung von der Blattspitze in Richtung Nabe, vgl. Abbildung 2) liegen bei einer Verformungsmessung unter einem Richtungswinkel nahe 0° oder 180° keine definierten Lastrichtungswechsel vor. Aus diesem Grund werden vorzugsweise bei einem Sensor, der in dieser Position angeordnet ist, nicht die gemessene Amplitude des Abstands ausgewertet, sondern vielmehr ein Mittelwert des gemessenen Abstands für eine bestimmte Zeit. Ergänzend wird vorzugsweise die Drehzahl in der Auswertung mit einbezogen, um das Ergebnis zu verbessern. Steigt der (insbesondere gemittelte) Abstand mit der Zeit an, kann auf eine fortschreitende Schädigung des Lagers geschlossen werden.

Gewöhnlich werden Sensorsignale auf Windkraftanlagen von der Anlagensteuerung oder einem Condition Monitoring System erfasst und ausgewertet. Da die Integration von neuen Messsystemen in bestehende Anlagen allerdings schwierig oder teilweise unmöglich ist, ist in bevorzugter Ausgestaltung das Messsystem völlig autark von der Anlagensteuerung ausgebildet.

Dazu wird in bevorzugter Ausgestaltung ein Auswertemodul mit einer Funkeinheit ausgebildet, die die Messergebnisse an eine zentrale Auswerteeinheit/Station außerhalb der Windkraftanlage übermittelt. Bei dem Auswertemodul handelt es sich beispielsweise um die Auswerteeinheit oder alternativ um ein separates Modul, das Teilfunktionen der Auswerteeinheit übernimmt. Für die Funkübertragung wird beispielsweise auf das Mobilfunknetz zurückgegriffen. Bei der zentralen Station handelt es sich beispielsweise um eine entfernt von der Windkraftanlage angeordnete Überwachungsstation des Anlagenbetreiber oder auch eines Serviceanbieters zur Überwachung der Funktionsfähigkeit des Blattlagers.

Da die Spannungsversorgung der Sensorik bzw. der Auswerteeinheit bei einer Nachrüstung des Systems ebenfalls schwierig ist, ist vorzugsweise weiterhin in der Auswerteeinheit/ in dem Auswertemodul ein Energiespeicher vorgesehen werden. Besonders vorteilhaft ist ein Energieerzeuger, der sich die Rotation der Nabe zu Nutze macht. Dabei handelt es sich z.B. um ein in der Nabe angebrachtes Pendel. Bei Rotation der Nabe rotiert das Pendel relativ zur Nabe und kann dadurch Energie erzeugen. Über die derart erzeugte Energie werden auch die weiteren Komponenten des Messsystems wie die Steuereinheit oder der Sensor mit Energie versorgt. Das Messsystem ist daher auch als ganzes Energieautark und unabhängig von Windkraftanlage.

Durch die Kombination von Drehzahlauswertung, Auswerteeinheit, Funkmodul und Energiespeicher bzw. Energieerzeuger ist in besonderes bevorzugter Ausgestaltung ein Zustandsüberwachungssystem, nämlich das Messsystem für Blattlager geschaffen, das eine sehr genaue Auswertung der Schädigung erlaubt, die Trendentwicklung zuverlässig abbildet und gleichzeitig problemlos in bestehende Anlagen integriert werden kann.

In einer Weiterbildung der Erfindung wird zweckdienlicherweise eine erweiterte Messfläche bereitgestellt, so dass eine Gesamt-Messfläche auf einen Winkelbereich von beispielsweise bis 110°und insbesondere bis auf 45° oder nur bis auf ca. 35° erweitert wird, sodass auch während des eines Verdrehens der Rotorblätter oberhalb der Nennleistung der Anlage, beispielsweise beim Pitchen oder auch beim Verfahren in oder aus die Ruhestellung ein Abstandsmesswert erhalten wird. Dadurch wird vorzugsweise detektiert, inwieweit z.B. das Schadensbild False Brinelling fortgeschritten ist. Da es sich beim False Brinelling um regelmäßige Vertiefungen in der Laufbahn handelt, führt dies in einer Messung beim Drehen (z.B. beim Pitchen oder beim Verdrehen in die oder aus der Ruhestellung) des Lagers zu kleinwelligen Abstandsänderungen, wobei deren Amplitude der Tiefe des False Brinelling entspricht. Aber auch andere Schäden können dadurch erfasst werden, da jeder Schaden bei der Überrollung zu einer spezifischen Abstandsänderung führt, die der lastabhängigen Abstandsänderung überlagert ist. Über sich wiederholende Muster kann damit auf Schäden geschlossen werden. Damit kann durch die Messung auch auf die Art der Schädigung geschlossen werden. Bevorzugt wird für die Auswertung der Messergebnisse eine FFT-Analyse herangezogen. Ein solche ist insbesondere bei Kenntnis der Drehzahl des Rotorblatts von Vorteil. Die Drehzahl ist beispielsweise beim Verdrehen aus der Ruhestellung in die Normalstellung bekannt bzw. anlagenspezifisch vorgegeben.

Für die Auswertung der Messung ist es vorzugsweise vorgesehen, zwischen Drehen und Stehen zu unterscheiden. Dafür kann entweder auf Werte aus der Anlagensteuerung zurückgegriffen werden und/ oder ein zusätzlicher Positionssensor angebracht werden.

In besonders vorteilhafter Weise sind hierzu die Messfläche und die erweiterte Messfläche in Messrichtung zueinander abgesetzt. Hierunter wird verstanden, dass der Abstand der Messfläche zum Sensor in der stehenden Position deutlich kleiner oder größer ist als der Abstand der erweiterten Messfläche im Messbereich beim Pitchen / Verdrehen. Die Messfläche erstreckt sich daher allgemein in einer Umfangsrichtung um die Drehachse über einen Messwinkelbereich und weist mehrere - zumindest zwei vorzugsweise drei - in radialer Richtung zueinander abgesetzte Teilbereiche auf. Anhand der Teilbereiche wird vorzugsweise auf unterschiedliche Betriebszustände zurückgeschlossen, wie Normalstellung, Pitchen zur Leistungsbegrenzung, Verfahren in eine oder aus dieser heraus Ruhestellung sowie Ruhestellung. Durch diese Ausgestaltung der abgesetzten Gesamt-Messfläche ist das System wiederum unabhängig von der Anlagensteuerung und es erkennt autark die aktuelle Betriebssituation.

In bevorzugter Weiterbildung ist die Messfläche daher mehrfach, insbesondere 3-fach abgesetzt, um automatisch zwischen den Betriebszuständen - Normalstellung - Pitchen - Verfahren in die / aus der Ruhestellung (Fahnenstellung) zu unterscheiden. Der Abstand des Sensors zur Messfläche ist daher für jeden dieser Betriebszustände charakteristisch und voneinander verschieden. Die Messfläche ist allgemein derart ausgebildet, dass für einen ersten Dreh-Winkelbereich beispielsweise für maximal bis zu 3° oder 5° für den Normalbetrieb der Abstand konstant ist, anschließend der Abstand sich bevorzugt sprunghaft ändert und dann für einen zweiten Dreh-Winkelbereich konstant ist, der den Pitchbereich charakterisiert und insbesondere im Bereich bis zu 30° oder 45° liegt. Anschließend schließt sich ein dritter abgesetzter Bereich der Messfläche an, d.h. der Abstand ändert sich wiederum insbesondere sprunghaft und bleibt dann vorzugsweise über einen dritten Winkelbereich bis 90°oder 110° (Ruhestellung) konstant.

Wie zuvor bereits ausgeführt, wird in einer vorteilhaften Ausgestaltung die Abstandsmessung während des Verdrehens der Rotorblätter durchgeführt, um beispielsweise Aussagen zum Schadensbild des False Brinelling zu erhalten. Bevorzugt erfolgt dies während des Verdrehens von der Ruhestellung in Normalstellung. Auf eine Messung beim Pitchen wird dagegen vorzugsweise verzichtet. Der Vorteil der Messung beim Verfahren von der Ruhestellung in Normalstellung ist darin zu sehen, dass hierbei mit typischerweise einer konstanten Drehgeschwindigkeit gleichmäßig verfahren wird oder zumindest eine anlagenspezifisch definierten Verlauf der Drehgeschwindigkeit vorliegt, wohingegen beim Pitchen das Verdrehen (Richtung und Geschwindigkeit) in Abhängigkeit der aktuellen Windlast variieren kann. Das Abstandssignal kann dann beispielsweise über eine FFT-Analyse ausgewertet werden.

Bevorzugt ist das Messsystem, insbesondere die Auswerteeinheit derart ausgebildet, dass sie das Verlassen der Ruhestellung erfasst, also den Übergang von der Ruhestellung in die Drehbewegung zur Normalstellung hin, und dann insbesondere die Abstandsmessung startet. Das Verlassen der Ruhestellen wird beispielsweise aus der Anlagensteuerung entnommen. Bevorzugt wird das Verlassen der Ruhestellung jedoch autark erkannt, also unabhängig von der Anlagensteuerung. Gemäß einer ersten Variante erfolgt dies durch eine geeignete Ausgestaltung der insbesondere mehrfach abgesetzten Messfläche, indem z.B. beim Beginn der Drehbewegung aus der definierten Ruhestellung eine definierte Änderung des Abstands zwischen Sensor und Messfläche eingestellt ist. Gemäß einer zweiten Variante erfolgt dies mit Hilfe eines autarken Sensors. Typischerweise verfährt das Rotorblatt aus der Ruhestellung kontinuierlich bis in die Normalstellung.

Da es insbesondere beim Nachrüsten des Systems schwierig ist eine ebene und perfekt ausgerichtete Messfläche über einen größeren Winkelbereich anzubringen, ist in bevorzugter Ausgestaltung vorgesehen, dass nach der Installation des Messsystems eine Referenzfahrt durchgeführt wird, um evtl. Abweichung der Messflächen zu erfassen. Diese wird dann im Messsystem als Referenz gespeichert, und die Abstandsmessung wird geeignet korrigiert.

Die Aufgabe wird erfindungsgemäß weiterhin gelöst durch ein autarkes Messsystem gemäß Anspruch 14. Dieses ist insbesondere als Nachrüstsatz zum Nachrüsten von bestehenden Anlagen ausgebildet. Es umfasst den zumindest einen Sensor und ggf. ein als (abgesetzte) Messfläche dienendes Element sowie die für die Auswertung der Messergebnisse eingerichtete Auswerteeinheit. Der Nachrüstsatz ist dabei für einen autarken, von der Anlagensteuerung unabhängigen Betrieb eingerichtet. Die zuvor angeführten Weiterbildungen und bevorzugten Ausgestaltungen der einzelnen Komponenten des Messsystems sind gleichermaßen auf das autarke Messsystem zu übertragen.

Weitere Details ergeben sich aus den nachfolgenden Abbildungen. Es zeigen jeweils in schematischen stark vereinfachten Darstellungen:
- Fig.: eine Stirnansicht auf eine Nabe einer Windkraftanlage mit daran befestigten Rotorblättern,
- Fig. 2: eine stark vereinfachte Stirnansicht auf ein Blattlager in Blickrichtung einer Drehachse des Blattlagers zur Erläuterung der Ausrichtung des Blattlagers,
- Fig. 3: eine zu der Fig. 2 ähnliche Ausgestaltung mit ergänzend skizziertem Rotorblatt,
- Fig. 4: eine ausschnittsweise Darstellung zur Illustration der Anordnung eines Sensors und einer Messfläche für eine axiale Messung,
- Fig. 5: eine ausschnittsweise Darstellung im Bereich des Blattlagers mit einer Anordnung des Sensors sowie der Messfläche für eine radiale Messung, sowie
- Fig. 6: eine alternative Anordnung zur Überwachung eines Risses in einem-Lagerring.

In den Figuren sich gleich wirkende Bauteile mit den gleichen Bezugszeichen versehen.

In der Stirnansicht gemäß der Fig. 1 ist eine Nabe 2 dargestellt, an der im Ausführungsbeispiel insgesamt drei Rotorblätter 4 über jeweils ein Blattlager 6 befestigt ist. Die Nabe 2 ist in hier nicht näher dargestellter Weise mit einem Rotor der ebenfalls nicht weiter dargestellten Windkraftanlage verbunden. Die Nabe 2 sowie der Rotor rotieren im Betrieb um eine Rotationsachse 8. Die einzelnen Rotorblätter 4 sind über das jeweilige Blattlager 6 um eine jeweilige Drehachse 10 um einen sogenannten Pitch- oder Drehwinkel β verdrehbar. Hierbei erfolgt keine vollständige 360°-Drehung. Zur Verstellung der Blattlager aus einer Normalposition in eine Ruheposition erfolgt lediglich ein Verschwenken zwischen diesen beiden Positionen über einen begrenzten Winkelbereich von beispielsweise maximal 110° oder auch weniger.

Beim Betrieb und der Rotation der Nabe 2 um die Rotationsachse 8 treten unterschiedliche Beanspruchungen für die Blattlager 6 auf. Diese Belastungen führen allgemein zu Biege- oder Kippmomenten im Bereich der Blattlager 6. Diese Biegemomente werden einerseits durch ein windlastbedingtes Biegemoment Mx und zum anderen durch ein gewichtsbedingtes Biegemoment My gebildet. Während die windlastbedingten Biegemomente Mx bei einer Rotation der Nabe 2 und bei konstantem Wind gleich bleiben, verändert sich das gewichtsbedingte Biegemoment My während einer Umdrehung um die Rotationsachse 8 deutlich. Während beispielsweise in der in Fig. 1 dargestellten 12 Uhr-Position sowie 6 Uhr-Position gewichtsbedingt lediglich Axialkräfte übertragen werden und keine Biegemomente, ist bei einer Position auf der 3 Uhr- oder der 9 Uhr-Stellung ein maximales gewichtskraftbedingtes Biegemoment My anliegend.

Die Rotorblätter 4 spannen insgesamt eine Rotorebene 12 auf. Diese ist identisch mit der Blattebene der Fig. 1. Die Rotorebene 12 lässt sich definieren als die senkrecht zur Rotationsachse 8 orientierte Ebene. Die Windrichtung ist allgemein in Richtung der Rotationsachse 8 und damit in Blickrichtung von vorne auf die Nabe 2, also in Blickrichtung auf die Fig. 1.

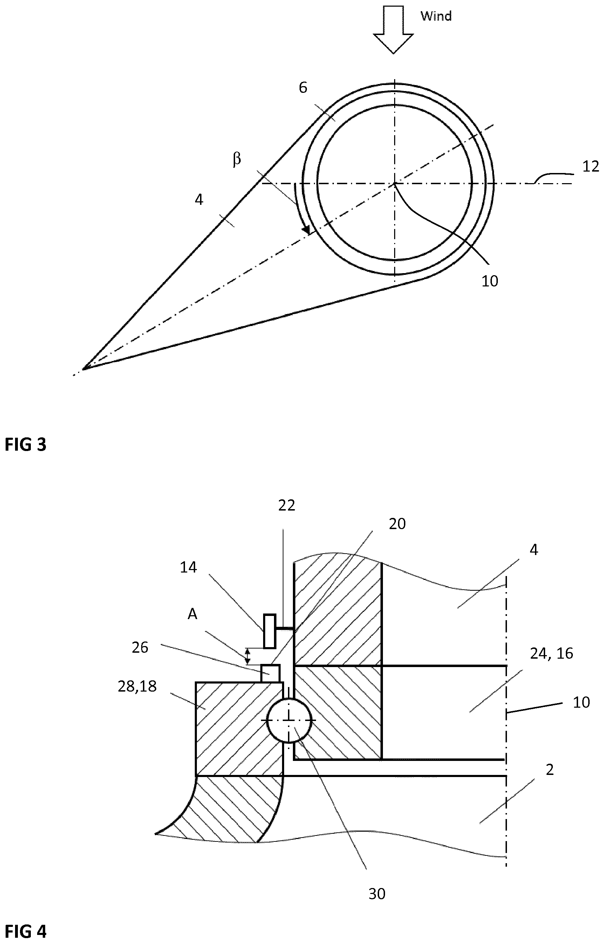

Anhand der Fig. 2 und 3 ist eine Stirnansicht auf ein Blattlager 6 schematisiert dargestellt, wobei die Windrichtung aus einer 0°-Winkelposition eines Richtungswinkels α angenommen ist. Die Windrichtung ist allgemein senkrecht zur Rotorebene 12 orientiert. Die Rotorebene 12 definiert - im Bild der Fig. 2 und bezogen auf den Richtungswinkel α - Positionen von +90° und -90° des Richtungswinkels a. Die Position gegenüberliegend zu der 0°-Position ist die +/-180°-Position und liegt auf der dem Wind abgewandten Seite des Blattlagers 6.

Wie insbesondere auch in Verbindung mit der Fig. 1 klar wird, treten die gewichtsbedingten Biegemomente My am stärksten in den Positionen und den Richtungswinkeln α +90° und -90°, also innerhalb der Rotorebene 12, wohingegen sie bei den Positionen unter dem Richtungswinkel α von 0 bzw. +/- 180° vernachlässigbar sind. Die windbedingten Biegemomente Mx treten demgegenüber im Wesentlichen an der Position unter den Richtungswinkeln α von 0 bzw. +/- 180° auf, sind dort also maximal.

In bevorzugter Ausgestaltung ist ein Sensor 14 für eine Abstandsmessung zwischen einem drehbarem Bauteil16 und einem feststehenden Bauteil 18 der Blattlageranordnung an einer Position angeordnet, wo der Einfluss des gewichtsabhängigen Biegemoments My hoch ist. Gemäß einer ersten Variante ist der Sensor 14 daher unter einem Richtungswinkel α von +/- 90° angeordnet.

Alternativ oder Ergänzend ist der Sensor 14 gerade nicht an den Positionen +/-90°, 0° oder 180° sondern in einer Position zwischen diesen Werten angeordnet. In der Figur 2 ist als alternative Variante ein Sensor 14 an einer 135°-Position angeordnet.

Bei einer Rotation um die Rotationsachse 8 führt dies zu einem sinusförmigen Verlauf des lastabhängigen Abstands. Aus der Periodendauer lässt sich somit unmittelbar die Zeitdauer für eine 360°-Rotation und damit die Drehzahl der Nabe 2 ermitteln. Aus dieser lässt sich auf die aktuell anliegende Windlast, beispielsweise durch eine Simulation oder auch durch Vergleich mit Referenzdaten schließen und hieraus wieder das aktuell anliegende windlastabhängige Biegemoment Mx ermitteln.

In der Fig. 3 ist weiterhin noch dargestellt, wie das Rotorblatt 4 um den Drehwinkel β verdreht werden kann, um das Rotorblatt 4 quasi aus dem Wind zu nehmen. Dies erfolgt typischerweise, wenn die (maximale) Nennlast überschritten wird, wenn also die Windgeschwindigkeiten zu groß werden.

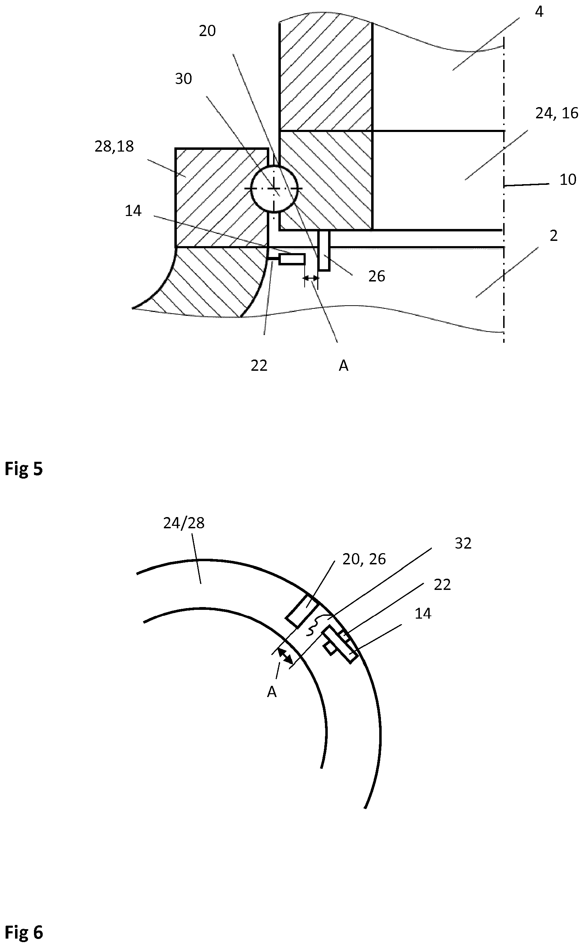

In den Abbildungen 4 und 5 sind zwei beispielhafte Anordnungen für den Sensor 14 sowie eine ihm zugeordnete Messfläche 20 dargestellt. Die gestrichelte Linie stellt dabei jeweils die Symmetrieebene bzw. Drehachse 10 dar. Sensor 14 und Messfläche 20 sind einerseits an dem drehbaren Bauteil 16 und andererseits an einem feststehenden Bauteil 18 angeordnet. Sofern vorliegend von einem drehbaren Bauteil 16 gesprochen wird, so handelt es sich allgemein um eine Komponente im Bereich des jeweiligen Blattlagers 6, welches sich bei einer Drehung um die Drehachse 10 dreht. Bei dem feststehenden Bauteil 18 handelt es sich um eine Komponente im Bereich des Blattlagers 6, welches sich bei der entsprechenden Drehung des Rotorblatts 4 um die Drehachse 10 nicht bewegt.

Bei der Fig. 4 ist der Sensor 14 über einen Sensorhalter 22 am Rotorblatt 4 befestigt und damit ist der Sensor am drehenden Bauteil 16 und im drehenden System angebracht. Das Rotorblatt 4 ist mit einem Innenring 24 des Blattlagers verbunden.

Im Ausführungsbeispiel der Fig. 4 ist die Messfläche 20 Teil eines Messklotzes 26, welcher an einem Außenring 28 des Blattlagers 6 befestigt ist. Zwischen Innenring 24 und Außenring 28 ist noch ein Wälzkörper 30 dargestellt. Die Rotornabe 2 ist mit dem Außenring 28 verbunden. Der Außenring 28 und die Rotornabe 2 bilden - bezogen auf eine Drehung um die Drehachse 10 - das stehende System und das stehende Bauteil 18.

Die Messrichtung des Sensors 14 auf die Messfläche 20 ist daher gemäß Fig. 4 parallel zur Drehachse 10 und wird vorliegend als eine axiale Messung bezeichnet.

Im Unterschied hierzu ist bei der Ausführungsvariante der Fig. 5 eine radiale Messung vorgesehen, bei der der Sensor 14 in Richtung senkrecht zur Drehachse 10 misst. Der Sensor 14 ist hierbei an der Nabe 2 als das feststehende Bauteil und die Messfläche 20 als Oberfläche eines Messblechs am drehenden Bauteil, speziell dem Innenring 24 befestigt.

In beiden Fällen wird jeweils ein Abstand A zwischen Sensor und der Messfläche 20 ermittelt. Im Normalfall, wenn also das jeweilige Rotorblatt 4 in der Normalstellung (Drehwinkel β = 0°) orientiert ist, stehen sich Sensor 14 und Messfläche 20 gegenüber und es kann eine Abstandsmessung erfolgen.

Die Abstandsmessungen werden dabei wiederkehrend beispielsweise mit Zeitabständen von Tagen oder Wochen oder auch dauernd / kontinuierlich vorgenommen und insbesondere mit vorhergehenden Messungen oder Referenzmessungen verglichen.

Anhand einer Veränderung des gemessenen Abstands A bei gleichen Lastsituationen, beispielsweise gleiche Drehzahl (gleiche Windlast, gleiche Rotationswinkel der Nabe 2, vergleichbare Temperaturen ....) wird mittels einer hier nicht näher dargestellten Auswerteeinheit überprüft, ob kritische Veränderungen, also insbesondere eine Veränderung, beispielsweise eine Zunahme des Abstands A erfassbar sind, die ein Maß für eine zunehmende Schädigung des Blattlagers 6 darstellt. In Abhängigkeit des gemessenen Abstands A wird dann im Rahmen eines Condition Monitoring-Systems überprüft, ob und inwieweit eine eventuelle Schädigung vorangeschritten ist und ob und inwieweit ein Lageraustausch etc. erforderlich ist bzw. für wie viele Betriebsstunden das Blattlager 6 noch problemlos verwendet werden kann.

Hierbei wird auf die zuvor im allgemeinen Beschreibungsteil beschriebenen Auswerteprinzipien zurückgegriffen. Die Veranlassung der Abstandsmessungen erfolgt über eine hier nicht näher dargestellte Steuereinheit.

Insgesamt ist durch die Komponenten Sensor 14, Messfläche 20, Auswerteeinheit und Steuereinheit ein Messsystem geschaffen. Dieses Messsystem ist zweckdienlicherweise vollständig autark von der eigentlichen Anlagensteuerung der Windkraftanlage. Das Messsystem steht daher vorzugsweise nicht in datentechnischem Austausch mit der Anlagensteuerung. Zweckdienlicherweise ist es auch energieautark ausgebildet und weist eine eigene Energieerzeugungseinheit auf, die beispielsweise aus der Rotation der Nabe 2 Energie gewinnt.

Das Messsystem weist zweckdienlicherweise weiterhin ein Funkmodul auf, um die von dem Sensor erfassten Messdaten an eine entfernte Auswertestation zu übertragen. Die eigentliche Auswertung erfolgt dann beispielsweise in dieser Auswertestation. In diesem Fall ist beispielsweise der im Blattlager integrierter Teil der Auswerteeinheit reduziert auf das Funkmodul und eine erste Aufbereitung der Messdaten zur beispielsweise digitalen Datenübertragung über ein Mobilfunknetz.

In der Fig. 6 ist noch schematisiert eine alternative Anordnung für den Sensor 14 und die Messfläche 20 (hier in Form eines Messklotzes 26) dargestellt. Der Sensor 14 sowie der Messklotz 26 sind an einem Lagerring (Innenring 24 oder Außenring 28) in Umfangsrichtung zueinander beabstandet angebracht. Die Messung des Abstands A erfolgt hierbei über einen Riss 32 hinweg, der sich im Lagerring 24,28 ausgebildet hat. Durch diese Maßnahme lässt sich Überwachen, ob sich der Riss 32 verändert um frühzeitig erkennen zu können, ob ein Austausch des Lagerrings erforderlich ist.

Bei einem Riss 32 erfolgt daher eine Abstandsmessung vorzugsweise in tangentialer Richtung. Dazu wird auf der einen Seite des Risses 32 die Messfläche 26und auf der anderen Seite der Sensor 14 angebracht. Unter Lasteinfluss kommt es zum Klaffen des Risses, sodass sich der gemessene Abstand A vergrößert. Beim Umlaufen des Rotors ergibt sich ebenfalls ein Sinusförmiger Verlauf des Abstandssignals. Eine steigende Amplitude über der Zeit lässt auf einen zunehmenden Rissfortschritt schließen. Auch aus einem solchen Signal kann die Drehzahl ermittelt werden und die Messergebnisse klassiert werden. Eine Messung mit einer derartigen Anordnung ist im Schadensfall Riss genauer. Wird ein Riss erkannt, kann ein Umbau der Sensoranordnung vorgesehen werden oder eine entsprechende Sensoranordnung zusätzlich ergänzt werden.

Das Messsystem wird in diesem Fall vorzugsweise nach Erkennen eines Risses 32 montiert, um diesen dann im weiteren Betrieb zu Überwachen. Auch bei dieser Überwachung werden die zuvor beschriebenen Prinzipien angewandt. Insbesondere werden auch hier die aktuellen Lastsituationen berücksichtigt. Hierbei stehen die zuvor beschriebenen Möglichkeiten zur Verfügung.

Diese in Fig. 6 dargestellte Abstandsmessung ist bevorzugt kombiniert mit einer Abstandsmessung zwischen relativ zueinander angeordneten rotierenden Bauteilen, wie dies zuvor z.B. in Verbindung mit den Fig. 4 und Fig. 5 beschrieben wurde. In diesem Fall stehen die Informationen z.B. über den aktuellen Lastzustand (incl. z.B. Umgebungsbedingungen) gleichermaßen für beide Abstandsmessungen zur Verfügung. Die Auswertung der Messergebnisse erfolgt beispielsweise über eine gemeinsame Auswerteeinheit.

Die hier beschriebene Vorrichtung zur Überwachung des Blattlagers 6 und insbesondere die einzelnen Komponenten, die das (autarke) hier beschriebene Messsystem zeichnet sich insbesondere durch die Kombination folgender Merkmale aus:
a) Die Vorrichtung ist für Drehzahlbestimmung aus dem Messsignals des Sensors 14 ausgebildet. Aus der Drehzahl wird auf die aktuelle Lastsituation geschlossen.
b) Die Vorrichtung ist zur Unterscheidung zwischen unterschiedlichen Betriebszuständen ausgebildet, insbesondere durch die Ausgestaltung mit einer abgesetzten Messfläche 20.
c) Die Vorrichtung ist zur Berücksichtigung von externen Parametern, insbesondere die Temperatur ausgebildet.
d) Vorzugsweise auf Grundlage der zuvor genannten Punkte a) bis c) erfolgt eine Klassierung der Messergebnisse (aktuelle Lastsituation, aktuelle Temperatur), wobei zur Auswertung des Abstands A im Hinblick auf eine evtl. Schädigung die gemessenen Abstandswerte für eine jeweilige Klasse ausgewertet und insbesondere mit hinterlegten oder errechneten klassenspezifischen Vergleichswerten (gleiche Lastsituation und gleiche Temperatur) verglichen werden.
e) Die Vorrichtung ist vorzugsweise für einen autarken Betrieb undabhängig von einer Anlagensteuerung der Windkraftanlage ausgebildet, um z.B. eine einfache Nachrüstung bestehender Anlagen zu ermöglichen.
d) Die Vorrichtung ist ergänzend zur Messung auch während des Pitchens ausgebildet um weitere Fehler identifizieren zu können.
e) Die einzelnen Komponenten des Messsystems sind bevorzugt als autarke Komponenten eines Nachrüstsatzes für bestehende Anlagen ausgebildet.

### Bezugszeichenliste

- 2: Nabe
- 4: Rotorblatt
- 6: Blattlager
- 8: Rotationsachse
- 10: Drehachse
- 12: Rotorebene
- 14: Sensor
- 16: drehbares Bauteil
- 18: feststehendes Bauteil
- 20: Messfläche
- 22: Sensorhalter
- 24: Innenring
- 26: Messklotz
- 28: Außenring
- 30: Wälzkörper
- 32: Riss

- A: Abstand
- α: Richtungswinkel
- β: Drehwinkel

## Patentansprüche

1. Vorrichtung zur Überwachung eines Blattlagers (6) einer Windkraftanlage, welches um einen Drehwinkel (β) um eine Drehachse (10) drehbar an einer Nabe (2) gelagert ist, die um eine Rotationsachse rotierbar ist und mit einem Rotor verbunden ist, wobei die Vorrichtung aufweist
- ein im Betrieb um die Drehachse (10) drehbares Bauteil und ein feststehendes Bauteil (18)
- ein Messsystem mit
-- einem Sensor (14), der an einem der beiden Bauteile (16, 18) angeordnet ist,
-- einer dem Sensor (14) zugeordneten Messfläche (20), die an dem anderen Bauteil (18, 16) der beiden Bauteile (16, 18) oder an dem gleichen Bauteil (16,18) angeordnet ist,
-- einer Steuereinheit, die eingerichtet ist, während des Betriebs der Windkraftanlage wiederholt eine automatisierte Messung mit Hilfe des Sensors (14) zu veranlassen
-- einer Auswerteeinheit zur Auswertung der Messung, wobei
der Sensor (14) für eine berührungslose Messung des Abstands (A) zwischen dem Sensor (14) und der Messfläche (20) ausgebildet und die Auswerteeinheit dafür eingerichtet ist, anhand der Messung zu prüfen, ob das Blattlager (6) eine Schädigung aufweist.

2. Vorrichtung nach dem vorhergehenden Anspruch, wobei das Messsystem zur Ermittlung einer aktuellen Lastsituation ausgebildet ist und diese für die Prüfung in Relation zu dem gemessenen Abstand (A) setzt, wobei hierzu ein Last- und Betriebsverhalten des Blattlagers (6) berücksichtigt wird.

3. Vorrichtung nach dem vorhergehenden Anspruch, wobei die Auswerteeinheit zur Ermittlung eines aktuell auf das Blattlager (6) einwirkenden Biegemoments ausgebildet ist und hierzu insbesondere ein durch das Gewicht des jeweiligen Rotorblatts (4) verursachtes erstes Biegemoment (My) und/oder ein durch die aktuelle Windlast verursachtes zweites Biegemoment (Mx) berücksichtigt.

4. Vorrichtung nach einem der vorhergehenden Ansprüche, wobei ein jeweiliges Rotorblatt (6) aus einer Normalstellung um einen definierten Drehwinkel (β) um die Drehachse in eine Ruhestellung drehbar ist, wobei die Auswerteeinheit derart ausgebildet ist, dass die Prüfung nur bei einem konstanten Drehwinkel (β) erfolgt, wobei die Messfläche (20) sich bevorzugt nur über einen ersten Messwinkel von wenigen Grad insbesondere von maximal 5° bezogen auf die Drehachse (10) erstreckt, und wobei weiter vorzugsweise die Messfläche (20) derart relativ zum Sensor (14) angeordnet ist, dass eine Überdeckung von Sensor (14) und Messfläche (20) nur in der Normalstellung vorliegt.

5. Vorrichtung nach einem der vorhergehenden Ansprüche und nach Anspruch 2 oder 3, wobei die Auswerteeinheit derart ausgebildet ist, dass die aktuelle Windgeschwindigkeit berücksichtigt wird und hierzu - insbesondere in der Normalstellung - eine Drehzahl des Rotors ermittelt wird und aus der Drehzahl auf die Windgeschwindigkeit und weiter vorzugsweise auf das windlastabhängige zweite Biegemoment (Mx) zurückgeschlossen wird.

6. Vorrichtung nach dem vorhergehenden Anspruch, wobei zur Ermittlung der Drehzahl des Rotors ein zusätzlicher Sensor vorgesehen ist, der autark von einer Anlagensteuerung der Windkraftanlage und insbesondere als Schwerkraftsensor ausgebildet ist.

7. Vorrichtung und nach einem der beiden vorhergehenden Ansprüche, wobei die Auswerteeinheit zur Auswertung einer Abstandsmessung während mindestens einer Umdrehung des Rotors zur Ermittlung der Drehzahl des Rotors ausgebildet ist, insbesondere indem ein Zeitabstand zwischen Minima / Maxima der gemessenen Abstandswerte ausgewertet wird oder indem eine FFT-Analyse der Messwerte durchgeführt wrid.

8. Vorrichtung nach einem der vorhergehenden Ansprüche, wobei die Auswerteeinheit zur Berücksichtigung einer Drehposition des Sensors (14) bezüglich der Drehachse (10) ausgebildet ist und die Rotorblätter (4) eine Rotorebene (12) aufspannen, wobei der Sensor (14) vorzugsweise zumindest im Wesentlichen innerhalb der Rotorebene (12) angeordnet ist.

9. Vorrichtung nach einem der vorhergehenden Ansprüche, bei der das Messsystem für einen autarken Betrieb unabhängig von einer Anlagensteuerung der Windkraftanlage ausgebildet ist und hierzu die Auswerteeinheit als eine autarke Einheit ausgebildet ist, die insbesondere keine Zustandsdaten aus der Anlagensteuerung erhält, und/oder hierzu das Messsystem energieautark ist.

10. Vorrichtung nach dem vorhergehenden Anspruch, wobei das Messsystem zur insbesondere drahtlosen Übertragung des Ergebnisses der Messung an eine zentrale Station ausgebildet ist.

11. Vorrichtung nach einem der vorhergehenden Ansprüche, bei der die Auswerteeinheit derart ausgebildet ist, dass zwei unterschiedliche Auswerteklassen berücksichtig werden, nämlich bei konstantem Drehwinkel (β) und bei variierendem Drehwinkel (β) während einer Blattverstellung, wobei während der Blattverstellung vorzugsweise die Schädigung mittels FFT-Analyse ausgewertet wird.

12. Vorrichtung nach einem der vorhergehenden Ansprüche, wobei eine erweiterte Messfläche ausgebildet ist, die sich über einen Winkelbereich um die Drehachse (10) erstreckt, der beim Verdrehen des jeweiligen Blattlagers (6) überstrichen wird und der größer 5° und vorzugsweise kleiner 110° ist, wobei eine Abstandsmessung vorzugsweise beim Verfahren aus der Ruhestellung in die Normalstellung erfolgt, wobei die Messung vorzugsweise gestartet wird, sobald ein Verlassen der Ruheposition erkannt wird.

13. Vorrichtung nach dem vorhergehenden Anspruch, wobei die erweiterte Messfläche und die Messfläche eine sich in einer Umfangsrichtung um die Drehachse (10) erstreckende Gesamtmessfläche bilden, die mehrere zueinander abgesetzte Teilbereiche aufweist, die zueinander versetzt angeordnet sind, so dass bei unterschiedlichen Drehwinkeln (β) unterschiedliche charakteristische Abstände (A) zwischen Sensor (14) und Messfläche (20) eingestellt sind, wobei vorzugsweise anhand der charakteristischen Abstände auf den aktuellen Betriebszustand zurückgeschlossen wird..

14. Messsystem, das für eine Vorrichtung zur Überwachung eines Blattlagers (6) einer Windkraftanlage nach einem der vorhergehenden Ansprüche ausgebildet ist, mit
- einem Sensor (14), der zur Anordnung an einem Bauteil (16, 18) der Vorrichtung und für eine berührungslose Messung eines Abstands (A) zwischen dem Sensor (14) und einer Messfläche (20) ausgebildet ist
- einer Steuereinheit, die eingerichtet ist, während des Betriebs der Windkraftanlage wiederholt eine automatisierte Messung des Abstands (A) mit Hilfe des Sensors (14) zu veranlassen,
- einer Auswerteeinheit zur Auswertung der Messung, wobei
die Auswerteeinheit dafür eingerichtet ist, anhand der Messung des Abstands (A) zu prüfen, ob das Blattlager (6) eine Schädigung aufweist und wobei die Auswerteeinheit bevorzugt unabhängig von einer Anlagensteuerung der Windkraftanlage ist.

15. Verfahren zur Überwachung eines Blattlagers (6) einer Windkraftanlage, welches um einen Drehwinkel (β) um eine Drehachse (10) drehbar an einer Nabe (2) gelagert ist und die Nabe (2) um eine Rotationsachse (8)rotierbar ist und mit einem Rotor verbunden ist, wobei ein um die Drehachse (10) drehbares Bauteil (16) und ein feststehendes Bauteil (18) sowie ein Messsystem vorgesehen sind, wobei das Messsystem aufweist
-- einen Sensor (14), der an einem der beiden Bauteile (16, 18)angeordnet ist,
-- eine dem Sensor (14) zugeordneten Messfläche (20), die an dem anderen Bauteil (18, 16) der beiden Bauteile oder an dem gleichen Bauteil (16,18) angeordnet ist, wobei
während des Betriebs der Windkraftanlage wiederholt eine automatisierte Messung mit Hilfe des Sensors (14) veranlasst wird, wobei mit dem Sensor (14) eine berührungslose Messung des Abstands (A) zwischen dem Sensor (14)und der Messfläche (20) erfolgt und anhand der Messung ausgewertet wird, ob das Blattlager (6) eine Schädigung aufweist.

## Claims

1. Device for monitoring a blade bearing (6) of a wind turbine, which is pivotably mounted about a pivot angle (β) about a pivot axis (10) on a hub (2), said hub being rotatable about a rotation axis and connected to a rotor, wherein the device comprises
- a component pivotable about the pivot axis (10) during operation and a fixed component (18)
- a measuring system with
- a sensor (14), which is arranged on one of the two components (16, 18),
- a measuring surface (20) associated with the sensor (14), which is arranged on the other component (18, 16) of the two components (16, 18) or on the same component (16, 18),
- a control unit, which is set up to repeatedly initiate an automated measurement by means of the sensor (14) during operation of the wind turbine,
- an evaluation unit for evaluating the measurement, wherein the sensor (14) is designed for a contactless measurement of the distance (A) between the sensor (14) and the measuring surface (20) and the evaluation unit is set up to check, on the basis of the measurement, whether the blade bearing (6) has any damage.

2. Device according to the preceding claim, wherein the measuring system is designed to determine a current load situation and to set this in relation to the measured distance (A) for the test, wherein for this purpose a load and operating performance of the blade bearing (6) is taken into account.

3. Device according to the preceding claim, wherein the evaluation unit is designed to determine a bending moment currently acting on the blade bearing (6) and for this purpose takes into account in particular a first bending moment (My) caused by the weight of the respective rotor blade (4) and/or a second bending moment (Mx) caused by the current wind load.

4. Device according to one of the preceding claims, wherein a respective rotor blade (6) is pivotable from a normal position about a defined pivot angle (β) about the pivot axis into a rest position, wherein the evaluation unit is designed in such way that the test is only carried out at a constant pivot angle (β), wherein the measuring surface (20) preferably extends only over a first measuring angle of a few degrees, in particular of a maximum of 5° with respect to the pivot axis (10), and wherein further preferably the measuring surface (20) is arranged relative to the sensor (14) in such way that the sensor (14) and measuring surface (20) overlap only in the normal position.

5. Device according to one of the preceding claims and according to claim 2 or 3, wherein the evaluation unit is designed in such way that the current wind speed is taken into account and for this purpose - in particular in the normal position - a rotational speed of the rotor is determined and from the rotational speed the wind speed and further preferably the wind load-dependent second bending moment (Mx) is deduced.

6. Device according to the preceding claim, wherein for determining the rotational speed of the rotor an additional sensor is provided, which is designed self-sufficient of a system control of the wind turbine and in particular as a gravity sensor.

7. Device and according to one of the two preceding claims, wherein the evaluation unit is designed to evaluate a distance measurement during at least one rotation of the rotor to determine the rotational speed of the rotor, in particular by evaluating a time interval between minima / maxima of the measured distance values or by carrying out an FFT analysis of the measured values.

8. Device according to one of the preceding claims, wherein the evaluation unit is designed to take into account a pivot position of the sensor (14) with respect to the pivot axis (10) and the rotor blades (4) span a rotor plane (12), wherein the sensor (14) is preferably at least substantially arranged within the rotor plane (12).

9. Device according to one of the preceding claims, in which the measuring system is designed for self-sufficient operation independent of a system control of the wind turbine and for this purpose the evaluation unit is designed as an self-sufficient unit which, in particular does not receive any status data from the system control, and/or for this purpose the measuring system is energy self-sufficient.

10. Device according to the preceding claim, wherein the measuring system is designed for the in particular wireless transmission of the result of the measurement to a central station.

11. Device according to one of the preceding claims, in which the evaluation unit is designed in such way that two different evaluation classes are taken into account, namely at a constant pivot angle (β) and at a varying pivot angle (β) during a blade adjustment, wherein during the blade adjustment preferably the damage is evaluated by means of FFT analysis.

12. Device according to one of the preceding claims, wherein an extended measuring surface is formed, which extends over an angular range around the pivot axis (10), said angular range being swept over during pivoting of the respective blade bearing (6) and being greater than 5° and preferably less than 110°, wherein a distance measurement is preferably carried out when moving from the rest position to the normal position, wherein the measurement is preferably started as soon as a leaving of the rest position is detected.

13. Device according to the preceding claim, wherein the extended measuring surface and the measuring surface form a total measuring surface extending in a circumferential direction about the pivot axis (10), which has a plurality of mutually offset partial regions which are arranged offset from one another, so that at different pivot angles (β) different characteristic distances (A) between sensor (14) and measuring surface (20) are set, wherein the current operating state is preferably inferred from the characteristic distances.

14. Measuring system, which is designed for a device for monitoring a blade bearing (6) of a wind turbine according to one of the preceding claims, having
- a sensor (14), which is designed for arrangement on a component (16, 18) of the device and for a contactless measurement of a distance (A) between the sensor (14) and a measuring surface (20),
- a control unit, which is arranged to repeatedly initiate an automated measurement of the distance (A) with the aid of the sensor (14) during operation of the wind turbine,
- an evaluation unit for evaluation of the measurements, wherein
the evaluation unit is set up to check, on the basis of the measurement of the distance (A), whether the blade bearing (6) has any damage, and wherein the evaluation unit is preferably independent of a system control of the wind turbine.

15. Method for monitoring a blade bearing (6) of a wind turbine, which is pivotably mounted about a pivot angle (β) about a pivot axis (10) on a hub (2) and the hub (2) is rotatable about a rotation axis (8) and is connected to a rotor, wherein a component (16) pivotable about the pivot axis (10) and a fixed component (18) and a measuring system are provided, wherein the measuring system comprises:
- a sensor (14), which is arranged on one of the two components (16, 18),
- a measuring surface (20) associated with the sensor (14), which is arranged on the other component (18, 16) of the two components or on the same component (16, 18), wherein
during operation of the wind turbine, an automated measurement is repeatedly initiated by means of the sensor (14), wherein with the sensor (14) a contactless measurement of the distance (A) between the sensor (14) and the measuring surface (20) is carried out and the measurement is used to evaluate whether the blade bearing (6) has any damage.

## Revendications

1. Dispositif de surveillance d'un palier de pale (6) d'une éolienne, qui est monté de manière à pouvoir pivoter autour d'un angle de pivotement (β) autour d'un axe de pivotement (10) sur un moyeu (2), ledit moyeu (2) pouvant tourner autour d'un axe de rotation et étant relié à un rotor, dans lequel le dispositif comprend
- un composant pouvant pivoter autour de l'axe de pivotement (10) pendant le fonctionnement et un composant fixe (18)
- un système de mesure avec
- un capteur (14), qui est disposé sur l'un des deux composants (16, 18)
- une surface de mesure (20) associée au capteur (14), qui est disposée sur l'autre composant (18, 16) des deux composants (16, 18) ou sur le même composant (16, 18),
- une unité de commande qui est conçue pour lancer de manière répétée une mesure automatisée à l'aide du capteur (14) pendant le fonctionnement de l'éolienne,
- une unité d'évaluation pour l'évaluation de la mesure, dans laquelle le capteur (14) est conçu pour mesurer sans contact la distance (A) entre le capteur (14) et la surface de mesure (20) et l'unité d'évaluation est configurée pour vérifier, sur la base de la mesure, si le palier de pale (6) est endommagé.

2. Dispositif selon la revendication précédente, dans lequel le système de mesure est conçu pour déterminer une situation de charge actuelle et pour la mettre en relation avec la distance mesurée (A) pour le test, un comportement de charge et de fonctionnement du palier de pale (6) étant pris en compte à cet effet.

3. Dispositif selon la revendication précédente, dans lequel l'unité d'évaluation est conçue pour déterminer un moment de flexion agissant actuellement sur le palier de pale (6) et prend en compte à cet effet notamment un premier moment de flexion (My) provoqué par le poids de la pale de rotor respective (4) et/ou un deuxième moment de flexion (Mx) provoqué par la charge de vent actuelle.

4. Dispositif selon l'une des revendications précédentes, dans lequel une pale de pale (6) respective peut pivoter à partir d'une position normale autour d'un angle de pivotement défini (β) autour de l'axe de pivotement dans une position de repos, dans lequel l'unité d'évaluation est conçue de telle manière que le test est seulement effectué à un angle de pivotement constant (β), la surface de mesure (20) s'étendant de préférence seulement sur un premier angle de mesure de quelques degrés, en particulier de 5° maximum par rapport à l'axe de pivotement (10), et la surface de mesure (20) étant en outre de préférence disposée par rapport au capteur (14) de telle manière que le capteur (14) et la surface de mesure (20) ne se chevauchent qu'en position normale.

5. Dispositif selon l'une des revendications précédentes et selon la revendication 2 ou 3, dans lequel l'unité d'évaluation est conçue de telle sorte que la vitesse actuelle du vent est prise en compte et qu'à cette fin - en particulier en position normale - une vitesse de pivotement du rotor est déterminée et que de la vitesse de pivotement la vitesse du vent et, en outre de préférence, le deuxième moment de flexion (Mx) dépendant de la charge du vent sont déduits.

6. Dispositif selon la revendication précédente, dans lequel, pour déterminer la vitesse de pivotement du rotor, un capteur supplémentaire est prévu, qui est formé de manière autonome d'une commande d'installation de l'éolienne et en particulier comme capteur de gravité.

7. Dispositif et selon l'une des deux revendications précédentes, dans lequel l'unité d'évaluation est conçue pour évaluer une mesure de distance pendant au moins une rotation du rotor pour déterminer la vitesse de pivotement du rotor, en particulier en évaluant un intervalle de temps entre les minima / maxima des valeurs de distance mesurées ou en effectuant une analyse FFT des valeurs mesurées.

8. Dispositif selon l'une des revendications précédentes, dans lequel l'unité d'évaluation est conçue pour prendre en compte une position de pivotement du capteur (14) par rapport à l'axe de pivotement (10) et les pales (4) du rotor couvrent un plan de rotor (12), le capteur (14) étant de préférence disposé au moins sensiblement dans le plan de rotor (12).

9. Dispositif selon l'une des revendications précédentes, dans lequel le système de mesure est conçu pour un fonctionnement autonome indépendamment d'une commande d'installation de l'éolienne et, à cette fin, l'unité d'évaluation est conçue comme une unité autonome qui, en particulier, ne reçoit aucune donnée d'état de la commande d'installation, et/ou, à cette fin, le système de mesure est autonome sur le plan énergétique.

10. Dispositif selon la revendication précédente, dans lequel le système de mesure est conçu pour la transmission en particulier sans fil du résultat de la mesure à une station centrale.

11. Dispositif selon l'une des revendications précédentes, dans lequel l'unité d'évaluation est conçue de telle sorte que deux classes d'évaluation différentes sont prises en compte, notamment à un angle de pivotement constant (β) et à un angle de pivotement variable (β) lors d'un réglage de pale, dans lequel, lors du réglage de pale, le dommage est de préférence évalué au moyen d'une analyse FFT.

12. Dispositif selon l'une des revendications précédentes, dans lequel une surface de mesure étendue est formée, qui s'étend sur une zone angulaire autour de l'axe de pivotement (10), ladite zone angulaire étant balayée lors du pivotement palier de pale (6) respectif et étant supérieure à 5° et de préférence inférieure à 110°, dans lequel une mesure de distance est de préférence effectuée lors du passage de la position de repos à la position normale, dans lequel la mesure est de préférence lancée dès qu'une sortie de la position de repos est détectée.

13. Dispositif selon la revendication précédente, dans lequel la surface de mesure élargie et la surface de mesure forment une surface de mesure totale s'étendant dans une direction périphérique autour de l'axe de pivotement (10), qui comporte plusieurs zones partielles décalées les unes par rapport aux autres, qui sont disposées de manière décalée les unes par rapport aux autres, de sorte qu'à des angles de pivotement différents (β) différentes distances caractéristiques (A) entre le capteur (14) et la surface de mesure (20) sont réglées, l'état de fonctionnement actuel étant de préférence déduit des distances caractéristiques..

14. Système de mesure, qui est conçu pour la surveillance d'un palier de pale (6) d'une éolienne selon l'une des revendications précédentes, comprenant
- un capteur (14), qui est conçu pour être disposé sur un composant (16, 18) du dispositif et pour mesurer sans contact une distance (A) entre le capteur (14) et une surface de mesure (20),
- une unité de commande, qui est conçue pour lancer de manière répétée une mesure automatique de la distance (A) à l'aide du capteur (14) pendant le fonctionnement de l'éolienne,
- une unité d'évaluation pour l'évaluation des mesures, dans laquelle l'unité d'évaluation est configurée pour vérifier, sur la base de la mesure de la distance (A), si le palier de pale (6) est endommagé, et dans laquelle l'unité d'évaluation est de préférence indépendante d'une commande d'in de l'éolienne.

15. Procédé de surveillance d'un palier de pale (6) d'une éolienne, qui est monté de manière à pouvoir pivoter autour d'un axe de pivotement (10) selon un angle de pivotement (β) sur un moyeu (2) et le moyeu (2) peut tourner autour d'un axe de rotation (8) et est relié à un rotor, dans lequel un composant (16) pouvant pivoter autour de l'axe de pivotement (10) et un composant fixe (18) et un système de mesure sont prévus, dans lequel le système de mesure comprend
- un capteur (14), qui est disposé sur l'un des deux composants (16, 18)
- une surface de mesure (20) associée au capteur (14), qui est disposée sur l'autre composant (18, 16) des deux composants ou sur le même composant (16, 18), dans laquelle
pendant le fonctionnement de l'éolienne, une mesure automatisée de manière répétée est lancée au moyen du capteur (14), dans laquelle une mesure sans contact de la distance (A) entre le capteur (14) et la surface de mesure (20) est effectuée avec le capteur (14) et la mesure permet d'évaluer si le palier de pale (6) est endommagé.
